# EUROPEAN PATENT SPECIFICATION

(11) **EP 2 679 417 B1**
(45) Date of publication and mention of the grant of the patent: **04.03.2015**
(21) Application number: 12004729.5
(22) Date of filing: 25.06.2012
(51) Int. Cl.: B60H 1/00

(54) **Vehicle Heating, Ventilating and/or Air conditioning unit**
Fahrzeugheizungs-, Belüftungs und/oder Konditionierungseinheit
Dispositif de chauffage, ventilation et/ou climatisation pour véhicule

(43) Date of publication of application: 01.01.2014
(73) Proprietor: Valeo Autoklimatizace k.s., P.O. Box 90 26990 Rakovnik (CZ)
(72) Inventor: Onuska, Ivan, Prague 11; 14900 (CZ)
(74) Representative: Prinz & Partner mbB

(56) References cited:
- EP-A1- 0 865 945
- EP-A1- 1 564 045
- EP-A1- 1 616 734
- EP-A2- 1 445 133
- FR-A1- 2 833 530

## Description

The invention relates to a vehicle heating, ventilating and/or air conditioning unit according to the preamble of claims 1 or 2.

Vehicle heating, ventilating and/or air conditioning units, also known as HVAC units, have air mixing chambers in which hot and cold air is mixed and directed to a plurality of outlet openings leading to ventilation channels for different zones in the vehicle compartment, for example the wind shield, the foot area, the head area and front or rear zones of the vehicle compartment. Air flaps are provided in the output openings which allow the control of the air flow through each output opening.

In order to achieve a consistent temperature control and mixing ratio of hot and cold air, the air flaps can be controlled in a complex manner which requires complex automatic actuation of all air flaps, increasing the complexity and cost of the HVAC unit. It is also known to connect two or more air flaps with complex mechanical transmissions which require a plurality of moving parts.

Moreover, it is desirable to achieve air flow of different temperatures for different zones of the vehicle compartment. It is known on one hand to provide additional electric heating elements arranged in individual mixed air channel which allow independent additional heating of the corresponding air flow. On the other hand it is know to provide a plurality of independent mixing chambers wherein the mixing ratio of hot and cold air can be controlled independently. Both solutions require complex and bulky design of the HVAC unit.

A generic vehicle heating, ventilating and/or air conditioning unit including all features in the preamble of Claim 1 is disclosed in EP 0 865 945 A1.

Further, EP 1 616 734 A1 shows a generic vehicle heating, ventilating and/or air conditioning unit including all features in the preamble of Claim 2.

The object of the invention is to provide a multi-functional vehicle heating, ventilation and/or air condition unit having simple, compact and low cost design.

This objective is solved by a vehicle heating, ventilating and/or air conditioning unit comprising a housing for the unit in which air flow channels for hot and cold air flows are provided. The vehicle heating, ventilating and/or air conditioning unit further comprises a rotatable air flap for opening and closing at least one air flow channel, the air flap having a first flap wing with a first channel closure area and at least one second flap wing with a second channel closure area, which is preferably smaller than the first channel closure area. The second flap wing is connected with the first flap wing wherein an intermediate air flow channel is formed between the first and second flap wings.

This multifunctional air flap is able to control different air flow rates with the first and second flap wings, while allowing an air flow through the intermediate air flow channel. The at least two separate channel closure areas of the first and second flap wings allow the closure of respective air flow channels while the intermediate air flow channels formed between the first and second flap wings allow an air flow in the corresponding direction. The air flap has a simple design if the first and second flap wings are rigidly connected to each other and is therefore inexpensive to produce. It is neither required to have a complex automatic individual actuating mechanism for the different flap wings nor is a complex transmission mechanism with a plurality of moving components required

The vehicle heating, ventilation and/or air conditioning unit further comprises an air mixing chamber having hot and cold air inlet openings and at least two mixed air outlet openings wherein at least one of the mixed air outlet openings is associated with the air flap, the air flap having a closed position in which the mixed air outlet opening is closed by the first flap wing and an open position in which the mixed air outlet opening is open. Air mixing chambers with a plurality of mixed air outlet openings allow a compact design of the HVAC unit.

The vehicle heating, ventilation and/or air conditioning unit further comprises at least one hot air tube channel within the air mixing chamber having a hot air outlet opening directed at the at least one mixed air outlet opening wherein the opening of the hot air tube channel is closed by the second flap wing in the closed position of the air flap.

The hot air tube channel allows transport of hot air to an associated mixed air outlet opening. This allows a different local mixing ratio of hot and cold air at the associated mixed air outlet opening, thereby allowing individual temperature of the mixed air of different mixed air outlet openings of a single air mixing chamber. A HVAC unit with this design can be designed to be more compact with regard to HVAC units having multiple air mixing chambers.

The objective of the invention is further solved by a vehicle heating, ventilating and/or air conditioning unit comprising an air mixing chamber having hot and cold air inlet openings and at least two mixed air outlet openings with air flaps which are able to close the corresponding mixed air outlet openings, wherein an air guiding element is provided in the mixing chamber. The air guiding element comprises at least one hot air tube channel extending from the hot air inlet opening and having an hot air outlet opening in front of one of the mixed air outlet openings.

Further, a closing mechanism is provided which closes the hot air outlet opening of the hot air tube channel when the air flap of the associated mixed air outlet opening is in a closed position, and which opens the opening of the hot air tube channel when the air flap of the associated mixed air outlet opening is in an open position.

It is possible that the closing mechanism is formed by the air flap of the associated mixed air outlet opening, the air flap having a first flap wing with a first channel closure area to close the mixed air outlet opening and at least one second flap wing with a second channel closure area which is smaller than the first channel closure area to close the hot air outlet opening of the hot air tube channel, the second flap wing being rigidly connected to the first flap wing wherein an intermediate air flow channel is formed between the first and second flap wings.

The vehicle heating, ventilating and/or air conditioning units according to the invention may have a plurality of hot air channels which are arranged parallel to each other and are spaced apart from each other, forming a cold air channel within the air mixing chamber between them.

Preferably, the air flap comprises a plurality of second flap wings connected to the first flap wing. This allows the plurality of second flap wings and their corresponding second channel closure areas to close corresponding air flow channels.

First and second air flap wings may comprise sections which are arranged in parallel plains.

An air flow through the intermediate air flow channel formed between the first and second flap wings may be improved if a spacer is provided between the first and second flap wings, the spacer being arranged in parallel to the air flow in the intermediate air flow channel formed between the first and second flap wings.

The second channel closure area may be between 75 % and 25 %, preferably between 55 % and 45 % of the channel closure area.

Further features and advantages of the invention are disclosed in the following specification and the corresponding figures.
Figure 1 shows a first schematic section view of a vehicle heating, ventilation and/or air conditioning unit according to the invention with a mixing chamber;
Figure 2 shows a second schematic section view of the vehicle heating, ventilation and/or air conditioning unit of Figure 1;
Figure 3 shows a three dimensional section view of the vehicle heating, ventilation and/or air conditioning unit according to Figure 2;
Figure 4 shows detailed view of an air guiding element of the vehicle heating, ventilation and/or air conditioning unit of Figure 3;
Figure 5 shows a detailed view of an air flap of the vehicle heating, ventilation and/or air conditioning unit according to the invention;
Figure 6 shows a detailed section view of the vehicle heating, ventilation and/or air conditioning unit of Figure 3 with the air flap in its closed position; and
Figure 7 shows the detailed section view of Figure 6 with the air flap in its open position.

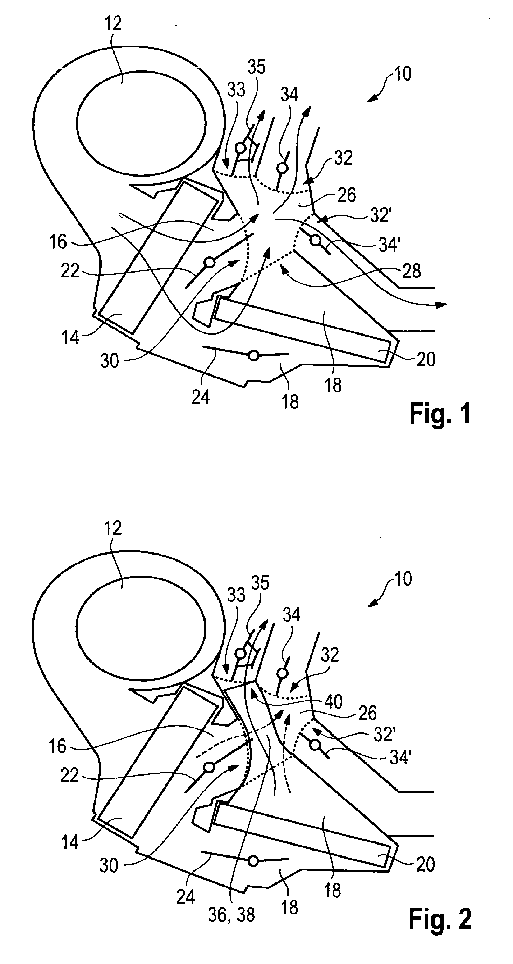

Figure 1 shows a schematic section view of a vehicle air heating, ventilation and/or air conditioning unit 10, in the following called HVAC unit 10. The HVAC unit 10 comprises a blower unit 12 which blows air through a system of air flow channels. The HVAC unit 10 may comprises a cooling device 14 provided in the main air flow channel and allows cooling and drying of the air supplied by the blower unit 12. Further, a filter element might be provided in the main air flow channel.

In air flow direction downsteam of the air cooling device 14, the main air flow channel divides into a cold air flow channel 16 for cold air and an hot air flow channel 18 for hot air. A heating device 20 is provided in the hot air flow channel 18 which is able to heat the air flowing through the hot air flow channel 18.

Each of the cold air flow channel 16 and the hot air flow channel 18 for cold and hot air respectively is provided with a respective air flap 22, 24 which is able to control the air volume flowing through the cold air flow channel 16 and the hot air flow channel 18.

A mixing chamber 26 is provided in the HVAC unit 10 to receive the air coming from the cold air flow channel 16 and/or the hot air flow channel 18. In Figure 1, the mixing chamber 26 is shown delimited by dotted lines.

Hot air from the hot air flow channel 18 can enter the mixing chamber 26 through a hot air inlet opening 28. Cold air can enter the mixing chamber 26 coming from the cold air flow channel 16 through a cold air inlet opening 30.

In the embodiment shown in Figure 1, the mixing chamber 26 has three mixed air outlet openings 32, 32', 33 through which mixed hot and cold air from the air mixing chamber 26 can flow to different regions of the vehicle compartment for ventilation. The air flows to and from the air mixing chamber 26 are represented by corresponding arrows in Figure 1.

Each mixed air outlet opening 32, 32', 33 is provided with an air flap 34, 34', 35 which is able to control the volume of mixed air flowing through the corresponding mixed air outlet opening 32, 32', 33.

Figure 2 shows a second section view of the HVAC unit 10 at a sectional plane parallel to that of Figure 1. An air guiding element 36 is provided in the mixing chamber 26. The air guiding element 36 comprises at least one hot air tube channel 38. In the present embodiment, three hot air tube channels 38 are provided which are arranged parallel to each other and are spaced apart from each other, forming a cold air channel within the air mixing chamber 26 between them.

The cold air channel is arranged in the sectional plane of Figure 1 and is indicated in Figure 2 by the dashed arrow coming from the cold air flow channel 16.

The hot air tube channel 38 extends from the hot air inlet opening 28 and has a hot air outlet opening 40 in front of the mixed air outlet opening 33.

In the present embodiment, all three hot air tube channels 38 are directed towards the same mixed air outlet opening 33. Hot air can, therefore, flow directly from the hot air flow channel 18 through the hot air tube channel 38 toward the mixed air outlet opening 33 in front of the hot air outlet opening 40 of the hot air tube channel 38. Alternatively, different hot air tube channels 38 can be directed towards different mixed air outlet openings 32, 33.

The air guiding element 36 is further provided with hot air mixing openings 41 which allow hot air to flow directly from the hot air flow channel 18 through the hot air inlet opening 28 into the air mixing chamber 26. This air flow is indicated in Figure 2 by the second dashed arrow leading from the hot air flow channel 18 into the mixing chamber 26.

The air guiding element 36 allows specific mixing ratios of hot and cold air for the different mixed air outlet openings of the HVAC unit 10. As the hot air tube channels 38 allow hot air to flow directly from the hot air inlet opening 28 to the corresponding mixed air outlet opening 33 a higher ratio of hot air to cold air can be realized for this specific mixed air outlet opening 33 as opposed to the remaining two mixed air outlet openings 32.

A closing mechanism 42 is provided which is able to close the hot air outlet opening 40 of the hot air tube channel 38 when the air flap 35 of the associated mixed air outlet opening 33 is in a closed position and is able to open the hot air outlet opening 40 of the hot air tube channel 38 when the air flap 35 of the associated mixed air outlet opening 33 is in an open position.

The closing mechanism 42 is formed by the air flap 35 of the associated mixed air outlet opening 33.

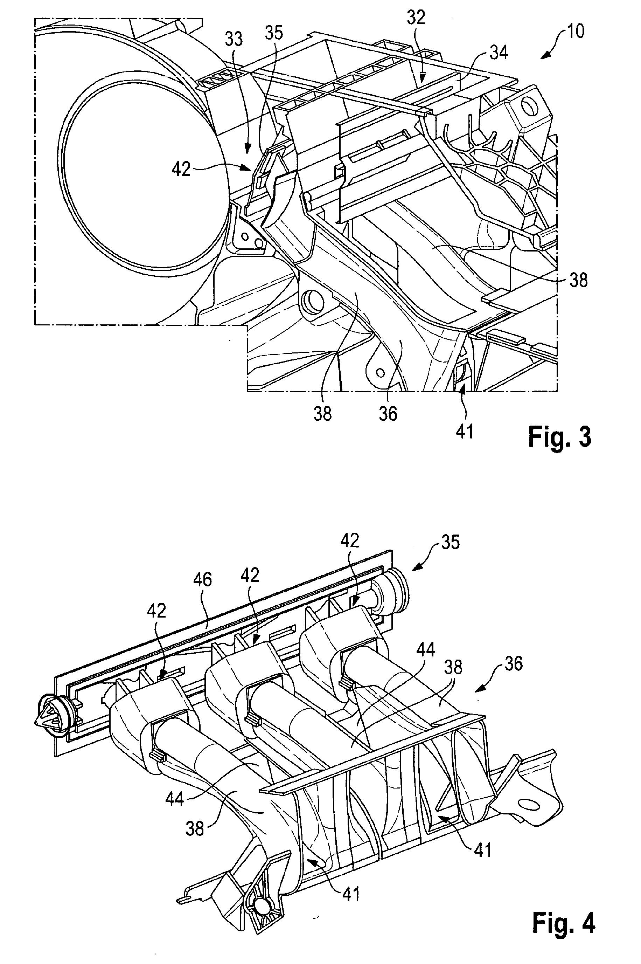

Figure 3 shows a detailed section view of the mixing chamber 26 of the HVAC unit 10, the sectional plane corresponding to the one of Figure 2. For reasons of clarity, a number of elements such as the blower unit 12, the air cooling device 14 and the air flap 22 of the cold air flow channel 16 are not shown.

The air flap 35 of the associated mixed air outlet opening 33 is shown in its closed position. The closing mechanism 42 is closing the hot air outlet opening 40 of the hot air tube channel 38. The closing mechanism 42 prevents hot air from exiting the hot air tube channels 38 through the hot air outlet opening 40 when the air flap 35 of the associated mixed air outlet opening 33 is in a closed position.

The closing mechanism 42 prevents hot air from exiting the hot air tube channels 38 through the hot air outlet opening 40 by the hot air flowing against the air flap 35 in its closed position, and by the hot air being redirected back into the air mixing chamber 26. Thereby the local mixing ratio of hot and cold air in particular near the neighboring mixed air outlet opening 32 is changed.

Figure 4 shows a three-dimensional view of the air guiding element 36 and the air flap 35 of the associated mixed air outlet opening 33 with the corresponding closing mechanism 42. The hot air tube channels 38 are arranged parallel to each other and are spaced apart from each other forming cold air channels 44 between each other. The hot air tube channels 38 are positioned downstream of the cold air inlet opening 30 and serve as baffle elements in the air flow coming from the cold air flow channel 16. The baffle elements create a turbulent air flow which enhances the mixing of hot and cold air in the mixing chamber 26.

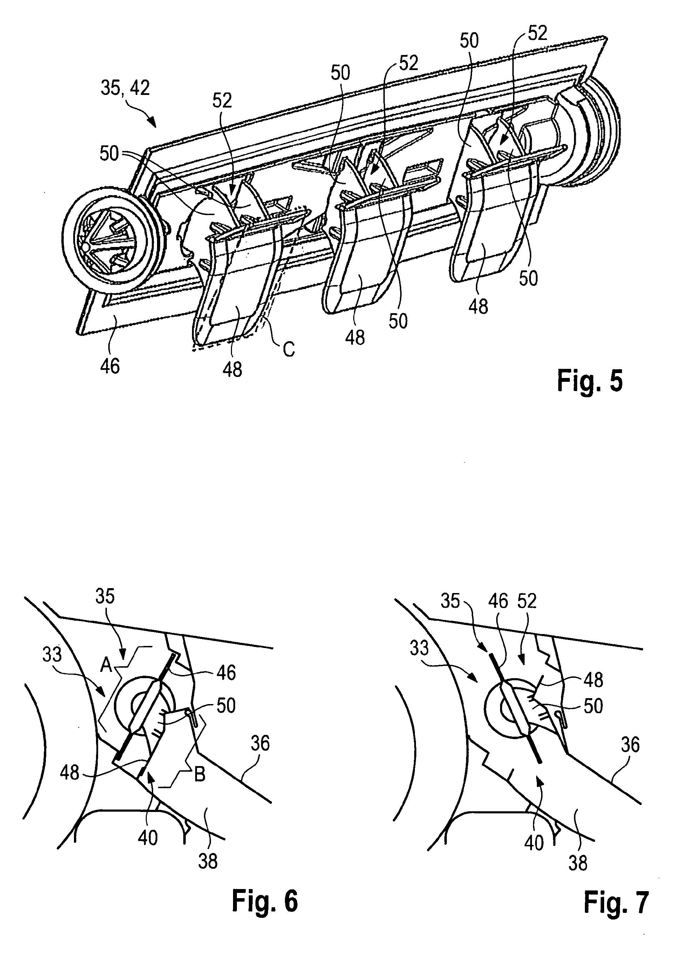

The closing mechanism 42 is further described in detail with regards to Figures 5, 6 and 7. Figure 5 shows the air flap 35 of the mixed air outlet opening 33 associated with the hot air tube channels 38 of the air guiding element 36. The closing mechanism is formed by the air flaps 35 of the mixed air outlet opening 33 associated with the hot air tube channels 38.

The air flap 35 has a first flap wing 46 having a first channel closure area A (see Figure 6) which corresponds to the cross-section of the mixed air outlet opening 33. The first flap wing 46 is able to close the mixed air outlet opening 33.

The air flap 35 further has at least one second flap wing 48. In the present embodiment three second flap wings 48 are provided, with a second channel closure area B (see Figure 6). Preferably, the second channel closure area B is smaller than the first channel closure area A of the first flap wing 46. The second flap wings 48 are each able to close a corresponding hot air outlet opening 40 of the hot air tube channels 38. The second closure area B is the total of the closure areas C (see Figure 5, dotted lines) of each second flap wing 48, i.e. those portions of the second flap wings 48 which close their corresponding openings 40.

The second flap wings 48 are rigidly connected to the first flap wing 46.

The rigid connection is formed by spacers 50 which are provided to the first and second flap wings 46, 48. Preferably, the spacer 50 is arranged in parallel to form an intermediate air flow channel 52 between the first and second flap wings 46, 48.

Figure 6 shows the closing mechanism 42 with the air flap 35 in its closed position in which the first flap wing 46 closes the mixed air outlet opening 33 and the second flap wing 48 in turn closes the hot air outlet opening 40 of the hot air tube channel 38 of the air guiding element 36.

Advantageously, the first and second air flap wings 48, 46, comprise sections which are arranged in parallel planes. The intermediate air flow channel 52 lies between these parallel planes.

Figure 7 shows the closing mechanism 42 with the air flap 35 in its open position in which the air flap 35 is rotated around its axis of rotation allowing an air flow to pass through the mixed air outlet opening 33. The rigidly connected second flap wing 48 is likewise rotated around the axis of rotation of the air flap 35, opening up the hot air outlet opening 40 of the hot air tube channel 38 of the air guiding element 36.

Hot air flowing out of the hot air outlet opening 40 can flow through the intermediate air flow channel 52 formed between the first and second flap wings 46, 48. The closing mechanism 42 therefore does not disturb the air flow through the mixed air outlet opening 33.

As can be seen in Figure 5, the total second closure area B of the three second air flap wings 48 corresponds to about 50 % of the first closure area A which corresponds to the cross-section of the mixed air outlet opening 33. It is also possible that the second closure area B is between 75 % and 25 %, preferably between 55 % and 45 % of the first closure area A.

In the present embodiment of the invention, the mixed air outlet opening 33 associated with the hot air tube channels 38 of the air guiding element 36 is associated with the ventilation ducts leading to the wind shield which perform a defrosting function for the wind shield.

It is also possible that the air guiding element 36 has hot air tube channels 38 extending towards different mixed air outlet openings 32, 33.

## Claims

1. Vehicle heating, ventilating and/or air conditioning unit (10)
comprising a housing for the unit in which air flow channels for hot and/or cold air flows are provided, and
comprising at least one rotatable air flap (35) for opening and closing at least one of the air flow channels, the air flap (35) having a first flap wing (46) with a first channel closure area (A) and at least one second flap wing (48) with a second channel closure area (B), the second flap wing (48) being connected to the first flap wing (46),
wherein an intermediate air flow channel (52) is formed between the first and second flap wings (46, 48),
further comprising an air mixing chamber (26) having hot and cold air inlet openings (28, 30) and at least two mixed air outlet openings (32, 33),
wherein at least one of the mixed air outlet openings (33) is associated with the air flap (35), the air flap (35) having a closed position in which the mixed air outlet opening (33) is closed by the first flap wing (46) and an open position in which the mixed air outlet opening (33) is open,
**characterized in that** at least one hot air tube channel (38) within the air mixing chamber (26) has a hot air outlet opening (40) in front of one of the mixed air outlet openings (33),
wherein the hot air outlet opening (40) of the hot air tube channel (38) is closed by the second flap wing (48) in the closed position of the air flap (35).

2. Vehicle heating, ventilating and/or air conditioning unit comprising an air mixing chamber (26) having hot and cold air inlet openings (28, 30) and at least two mixed air outlet openings (32, 33) with air flaps (34, 34', 35) which are able to close the corresponding mixed air outlet openings (32, 32', 33),
wherein an air guiding element (36) is provided in the mixing chamber (26), the air guiding element (36) comprising at least one hot air tube channel (38) extending from the hot air inlet opening (28) and having a hot air outlet opening (40) in front of one of the mixed air outlet openings (33),
**characterized in that** a closing mechanism (42) is provided which is able to close the hot air outlet opening (40) of the hot air tube channel (38) when the air flap (35) of the associated mixed air outlet opening (33) is in a closed position and to open the hot air outlet opening (40) of the hot air tube channel (38) when the air flap (35) of the associated mixed air outlet opening (33) is in an open position.

3. Vehicle heating, ventilating and/or air conditioning unit according to claim 2, wherein the closing mechanism (42) is formed by the air flap (35) of the associated mixed air outlet opening (33),
the air flap (34) having a first flap wing (46) with a first channel closure area (A) to close the mixed air outlet opening (33) and at least one second flap wing (48) with a second channel closure area (B) to close the hot air outlet opening (40) of the hot air tube channel (38),
the second flap wing (48) being rigidly connected to the first flap wing (46),
wherein an intermediate air flow channel (52) is formed between the first and second flap wings (46, 48).

4. Vehicle heating, ventilating and/or air conditioning unit according to one of the preceding claims, wherein a plurality of hot air tube channels (38) are provided which are arranged parallel to each other and are spaced apart from each other, forming a cold air channel (44) within the air mixing chamber (26) between them.

5. Vehicle heating, ventilating and/or air conditioning unit of one of the preceding claims, wherein the air flap (35) comprises a plurality of second flap wings (48) connected to the first flap wing (46).

6. Vehicle heating, ventilating and/or air conditioning unit of one of the preceding claims, wherein the first and second air flap wings (46, 48) comprise sections which are arranged in parallel planes.

7. Vehicle heating, ventilating and/or air conditioning unit of one of the preceding claims, wherein a spacer (50) is provided between the first and second flap wings (46, 48), the spacer (50) being arranged in parallel with the air flow in the intermediate air flow channel (52) formed between the first and second flap wings (46, 48).

8. Vehicle heating, ventilating and/or air conditioning unit of one of the preceding claims, wherein the a second channel closure area (B) is smaller than the first channel closure area (A).

9. Vehicle heating, ventilating and/or air conditioning unit of one of the preceding claims, wherein the second channel closure area is between 75% and 25%, preferably between 55% and 45%, of the first channel closure area.

## Patentansprüche

1. Fahrzeugheizungs-, -lüftungs- und/oder -klimaanlage (10)
mit einem Gehäuse für die Anlage, in dem Luftströmungskanäle für Warm- und/oder Kaltluftströme vorgesehen sind, und
mit wenigstens einer drehbaren Luftklappe (35) zum Öffnen und Schließen wenigstens eines der Luftströmungskanäle, wobei die Luftklappe (35) einen ersten Klappenflügel (46) mit einem ersten Kanalverschlussbereich (A) und wenigstens einen zweiten Klappenflügel (48) mit einem zweiten Kanalverschlussbereich (B) aufweist, wobei der zweite Klappenflügel (48) mit dem ersten Klappenflügel (46) verbunden ist,
wobei zwischen dem ersten und dem zweiten Klappenflügel (46, 48) ein dazwischenliegender Luftströmungskanal (52) gebildet ist,
ferner mit einer Luftmischkammer (26), die eine Warm- und eine Kaltlufteinlassöffnung (28, 30) und wenigstens zwei Mischluftauslassöffnungen (32, 33) aufweist,
wobei wenigstens eine der Mischluftauslassöffnungen (33) der Luftklappe (35) zugeordnet ist, wobei die Luftklappe (35) eine geschlossene Stellung, in der die Mischluftauslassöffnung (33) von dem ersten Klappenflügel (46) geschlossen ist, und eine offene Stellung hat, in der die Mischluftauslassöffnung (33) offen ist,
**dadurch gekennzeichnet, dass** wenigstens ein Warmluftrohrkanal (38) innerhalb der Luftmischkammer (26) eine Warmluftauslassöffnung (40) vor einer der Mischluftauslassöffnungen (33) hat,
wobei die Warmluftauslassöffnung (40) des Warmluftrohrkanals (38) in der geschlossenen Stellung der Luftklappe (35) von dem zweiten Klappenflügel (48) geschlossen ist.

2. Fahrzeugheizungs-, -lüftungs- und/oder -klimaanlage mit einer Luftmischkammer (26), die eine Warm- und eine Kaltlufteinlassöffnung (28, 30) und wenigstens zwei Mischluftauslassöffnungen (32, 33) mit Luftklappen (34, 34', 35) aufweist, die die entsprechenden Mischluftauslassöffnungen (32, 32', 33) schließen können,
wobei ein Luftführungselement (36) in der Mischkammer (26) vorgesehen ist, wobei das Luftführungselement (36) wenigstens einen Warmluftrohrkanal (38) umfasst, der sich von der Warmlufteinlassöffnung (28) erstreckt und eine Warmluftauslassöffnung (40) vor einer der Mischluftauslassöffnungen (33) hat,
**dadurch gekennzeichnet, dass** ein Schließmechanismus (42) vorgesehen ist, der dann, wenn die Luftklappe (35) der zugeordneten Mischluftauslassöffnung (33) in einer geschlossenen Stellung ist, die Warmluftauslassöffnung (40) des Warmluftrohrkanals (38) schließen kann, und dann, wenn die Luftklappe (35) der zugeordneten Mischluftauslassöffnung (33) in einer offenen Stellung ist, die Warmluftauslassöffnung (40) des Warmluftrohrkanals (38) öffnen kann.

3. Fahrzeugheizungs-, -lüftungs- und/oder -klimaanlage nach Anspruch 2, bei der der Schließmechanismus (42) von der Luftklappe (35) der zugeordneten Mischluftauslassöffnung (33) gebildet ist,
wobei die Luftklappe (34) einen ersten Klappenflügel (46) mit einem ersten Kanalverschlussbereich (A) zum Schließen der Mischluftauslassöffnung (33) und wenigstens einen zweiten Klappenflügel (48) mit einem zweiten Kanalverschlussbereich (B) zum Schließen der Warmluftauslassöffnung (40) des Warmluftrohrkanals (38) aufweist,
wobei der zweite Klappenflügel (48) starr mit dem ersten Klappenflügel (46) verbunden ist,
wobei zwischen dem ersten und dem zweiten Klappenflügel (46, 48) ein dazwischenliegender Luftströmungskanal (52) gebildet ist.

4. Fahrzeugheizungs-, -lüftungs- und/oder -klimaanlage nach einem der vorhergehenden Ansprüche, bei der mehrere Warmluftrohrkanäle (38) vorgesehen sind, die parallel zueinander angeordnet und voneinander beabstandet sind und dabei zwischen sich einen Kaltluftkanal (44) innerhalb der Luftmischkammer (26) bilden.

5. Fahrzeugheizungs-, -lüftungs- und/oder -klimaanlage nach einem der vorhergehenden Ansprüche, bei der die Luftklappe (35) mehrere zweite Klappenflügel (48) umfasst, die mit dem ersten Klappenflügel (46) verbunden sind.

6. Fahrzeugheizungs-, -lüftungs- und/oder -klimaanlage nach einem der vorhergehenden Ansprüche, bei der der erste und der zweite Luftklappenflügel (46, 48) Abschnitte umfassen, die in parallelen Ebenen angeordnet sind.

7. Fahrzeugheizungs-, -lüftungs- und/oder -klimaanlage nach einem der vorhergehenden Ansprüche, bei der ein Abstandshalter (50) zwischen dem ersten und dem zweiten Klappenflügel (46, 48) vorgesehen ist, wobei der Abstandshalter (50) parallel zur Luftströmung in dem dazwischenliegenden Luftströmungskanal (52) angeordnet ist, der zwischen dem ersten und dem zweiten Klappenflügel (46, 48) gebildet ist.

8. Fahrzeugheizungs-, -lüftungs- und/oder -klimaanlage nach einem der vorhergehenden Ansprüche, bei der der zweite Kanalverschlussbereich (B) kleiner als der erste Kanalverschlussbereich (A) ist.

9. Fahrzeugheizungs-, -lüftungs- und/oder -klimaanlage nach einem der vorhergehenden Ansprüche, bei der der zweite Kanalverschlussbereich zwischen 75% und 25%, vorzugsweise zwischen 55% und 45% des ersten Kanalverschlussbereichs beträgt.

## Revendications

1. Unité de chauffage, de ventilation et/ou de climatisation (10) pour véhicule,
comportant un boîtier pour l'unité dans lequel des canaux de flux d'air pour des flux d'air chaud et/ou froid sont prévus, et
comportant au moins un volet d'air (35) rotatif pour ouvrir et fermer au moins l'un des canaux de flux d'air, le volet d'air (35) présentant une première aile de volet (46) avec une première zone (A) de fermeture de canal, et au moins une deuxième aile de volet (48) avec une deuxième zone (B) de fermeture de canal, la deuxième aile de volet (48) étant reliée à la première aile de volet (46),
dans laquelle un canal intermédiaire de flux d'air (52) est réalisé entre les première et deuxième ailes de volet (46, 48),
comportant en outre une chambre de mélange d'air (26) qui présente des orifices d'entrée (28, 30) d'air chaud et froid et au moins deux orifices de sortie (32, 33) d'air mélangé,
dans laquelle au moins l'un des orifices de sortie (33) d'air mélangé est associé au volet d'air (35), le volet d'air (35) présentant une position fermée dans laquelle l'orifice de sortie (33) d'air mélangé est fermé par la première aile de volet (46), et une position ouverte dans laquelle l'orifice de sortie (33) d'air mélangé est ouvert,
**caractérisé en ce qu'**au moins un canal tubulaire (38) d'air chaud à l'intérieur de la chambre de mélange d'air (26) présente un orifice de sortie (40) d'air chaud devant l'un des orifices de sortie (33) d'air mélangé,
l'orifice de sortie (40) d'air chaud du canal tubulaire (38) d'air chaud étant fermé par la deuxième aile de volet (48) dans la position fermée du volet d'air (35).

2. Unité de chauffage, de ventilation et/ou de climatisation pour véhicule, comportant une chambre de mélange d'air (26) qui présente des orifices d'entrée (28, 30) d'air chaud et froid et au moins deux orifices de sortie (32, 33) d'air mélangé avec des volets d'air (34, 34', 35) qui sont aptes à fermer les orifices de sortie (32, 32', 33) d'air mélangé correspondants,
dans laquelle un élément de guidage d'air (36) est prévu dans la chambre de mélange (26), l'élément de guidage d'air (36) comportant au moins un canal tubulaire (38) d'air chaud qui s'étend depuis l'orifice d'entrée (28) d'air chaud et qui présente un orifice de sortie (40) d'air chaud devant l'un des orifices de sortie (33) d'air mélangé,
**caractérisé en ce qu'**il est prévu un mécanisme de fermeture (42) qui est apte à fermer l'orifice de sortie (40) d'air chaud du canal tubulaire (38) d'air chaud lorsque le volet d'air (35) de l'orifice de sortie (33) d'air mélangé associé est dans une position fermée, et à ouvrir l'orifice de sortie (40) d'air chaud du canal tubulaire (38) d'air chaud lorsque le volet d'air (35) de l'orifice de sortie (33) d'air mélangé associé est dans une position ouverte.

3. Unité de chauffage, de ventilation et/ou de climatisation pour véhicule selon la revendication 2, dans laquelle le mécanisme de fermeture (42) est formé par le volet d'air (35) de l'orifice de sortie (33) d'air mélangé associé,
le volet d'air (34) présentant un première aile de volet (46) avec une première zone (A) de fermeture de canal pour fermer l'orifice de sortie (33) d'air mélangé, et au moins une deuxième aile de volet (48) avec une deuxième zone (B) de fermeture de canal pour fermer l'orifice de sortie (40) d'air chaud du canal tubulaire (38) d'air chaud,
la deuxième aile de volet (48) étant reliée de manière rigide à la première aile de volet (46),
dans laquelle un canal intermédiaire de flux d'air (52) est réalisé entre les première et deuxième ailes de volet (46, 48).

4. Unité de chauffage, de ventilation et/ou de climatisation pour véhicule selon l'une des revendications précédentes, dans laquelle plusieurs canaux tubulaires (38) d'air chaud sont prévus, lesquels sont agencés parallèlement les uns aux autres et sont espacés les uns des autres en formant entre eux un canal d'air froid (44) à l'intérieur de la chambre de mélange d'air (26).

5. Unité de chauffage, de ventilation et/ou de climatisation pour véhicule selon l'une des revendications précédentes, dans laquelle le volet d'air (35) présente plusieurs deuxièmes ailes de volet (48) reliées à la première aile de volet (46).

6. Unité de chauffage, de ventilation et/ou de climatisation pour véhicule selon l'une des revendications précédentes, dans laquelle les première et deuxième ailes de volet d'air (46, 48) présentent des tronçons agencés dans des plans parallèles.

7. Unité de chauffage, de ventilation et/ou de climatisation pour véhicule selon l'une des revendications précédentes, dans laquelle un écarteur (50) est prévu entre la première et la deuxième aile de volet (46, 48), l'écarteur (50) étant agencé parallèlement au flux d'air dans le canal intermédiaire de flux d'air (52) réalisé entre les première et deuxième ailes de volet (46, 48).

8. Unité de chauffage, de ventilation et/ou de climatisation pour véhicule selon l'une des revendications précédentes, dans laquelle la deuxième zone (B) de fermeture de canal est plus petite que la première zone (A) de fermeture de canal.

9. Unité de chauffage, de ventilation et/ou de climatisation pour véhicule selon l'une des revendications précédentes, dans laquelle la deuxième zone de fermeture de canal constitue entre 75 % et 25 %, de préférence entre 55 % et 45 % de la première zone de fermeture de canal.
